(19) Europäisches Patentamt / European Patent Office / Office européen des brevets

(11) **EP 3 035 647 B1**

(12) **FASCICULE DE BREVET EUROPEEN**

(45) Date de publication et mention
de la délivrance du brevet:
**04.12.2019 Bulletin 2019/49**

(51) Int Cl.:
*H04L 12/24* *(2006.01)* *H04L 29/06* *(2006.01)*
*H04L 12/911* *(2013.01)* *G06F 16/2457* *(2019.01)*

(21) Numéro de dépôt: **15200077.4**

(22) Date de dépôt: **15.12.2015**

(54) **PROCÉDÉ DE CHOIX D'AU MOINS UN SERVICE ET DISPOSITIF ASSOCIÉ**

AUSWAHLVERFAHREN MINDESTENS EINES DIENSTES, UND ENTSPRECHENDE VORRICHTUNG

METHOD TO JOINTLY SELECT CLOUD COMPUTING AND NETWORK SERVICES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.12.2014 FR 1402857**

(43) Date de publication de la demande:
**22.06.2016 Bulletin 2016/25**

(73) Titulaire: **THALES**
**92400 Courbevoie (FR)**

(72) Inventeurs:
• **POUYLLAU, Helia**
**91767 Palaiseau Cedex (FR)**
• **DOTARO, Emmanuel**
**91767 Palaiseau Cedex (FR)**
• **LOPEZ-RAMOS, Mario**
**92622 Gennevilliers Cedex (FR)**

(74) Mandataire: **Lavoix**
**2, place d'Estienne d'Orves**
**75441 Paris Cedex 09 (FR)**

(56) Documents cités:
**US-A1- 2013 301 431**

**Description**

La présente invention concerne un procédé de choix d'au moins un service parmi une pluralité de services prédéterminés propres à être fournis par au moins un fournisseur de services, lesdits services formant au moins une partie d'un réseau de télécommunications, une partie des services étant des nœuds du réseau de télécommunications et une autre partie des services étant des liens entre lesdits nœuds, chaque service comprenant au moins un attribut, le procédé étant mis en oeuvre par un ordinateur comportant un logiciel de calcul.

L'invention s'applique au domaine des réseaux de télécommunications, en particulier à la fourniture de services, par un réseau de télécommunications, à un ensemble de demandeurs, suite à une requête formulée par au moins un demandeur. Par exemple, l'invention s'applique à des services fournis par un réseau dématérialisé de cloud computing (par exemple propre à fournir des services logiciels, des services de calcul ou des services de stockage), à des services de sécurité (par exemple un niveau de sécurité ou une fonction de sécurisation propre à être assurée par un fournisseur de réseau), ou encore à des services de réseaux (par exemple des services de connectivité présentant des caractéristiques garanties).

Les services sont fournis par des ressources du réseau de télécommunications, par exemple des ressources réseaux ou des ressources applicatives, telles que des machines virtuelles, des espaces de stockage, ou encore des liens réseau.

Par « demandeur », on entend un utilisateur d'un réseau de télécommunications qui est propre à saisir une requête pour demander l'allocation d'au moins un service par le réseau de télécommunications.

Il est connu, par exemple du document US 2013/301431 A1, de fournir des services réseaux, parmi un ensemble de services réseaux disponibles, à un demandeur ayant saisi une requête définissant ses besoins en terme de services. Par exemple, il est connu de recourir à des algorithmes propres à déterminer une solution, composée d'un ensemble de services répondant à la requête du demandeur.

Toutefois, de tels algorithmes ne sont pas en mesure de tenir compte d'un niveau de satisfaction requis par le demandeur, notamment dans des contextes présentant des exigences fortes liées à la sécurité des réseaux, à l'intégrité et à la confidentialité des informations qui transitent sur ces réseaux, et à la charge des différentes ressources des réseaux.

En d'autres termes, les algorithmes classiques ne sont pas propres à tenir compte du niveau de satisfaction requis par le demandeur, notamment dans des contextes présentant des exigences de priorité et de sécurité. Or, dans certains contextes d'utilisation, il est essentiel d'affecter des exigences de sécurité (par exemple une fonction de chiffrement ou encore une disponibilité au cours du temps d'une ressource) et de dépendance (par exemple une exclusion de placement géographique entre ressources), associées à des exigences de performance (par exemple un temps de réponse, ou encore un débit), et de s'assurer que ces exigences sont satisfaites au mieux.

Un but de l'invention est de proposer un procédé de choix d'au moins un service qui soit propre à traiter des requêtes d'un utilisateur et à tenir compte de la satisfaction d'une qualité de service attendue par ledit demandeur, par exemple, et de façon non exclusive, au regard d'exigences de sécurité et de priorité relatives à des services fournis par un réseau de télécommunications.

A cet effet l'invention a pour objet un procédé du type précité, comportant les étapes de :

- réception par un logiciel de calcul d'une requête saisie par un demandeur, la requête comportant au moins une composante relative aux services, la requête comprenant en outre une indication relative à un niveau de satisfaction attendu relatif à la satisfaction d'au moins un attribut d'une composante de la requête ;
- pour chaque composante de la requête, identification par un logiciel de calcul des services propres à satisfaire ladite composante ;
- construction par le logiciel de calcul d'un ensemble de candidats, chaque candidat comprenant une pluralité de services, chaque service de chaque candidat étant propre à satisfaire au moins une composante de la requête ;
- évaluation de chaque candidat par le logiciel de calcul, l'évaluation comprenant :

  - pour chaque service, le calcul d'un taux de satisfaction de chacun des attributs du service au regard de la requête, par un mode de calcul de taux de satisfaction prédéterminé ;
  - le calcul d'un score global du candidat par une fonction de coût prédéterminée, en fonction du taux de satisfaction d'au moins un service du candidat au regard du niveau de satisfaction attendu ;

- identification du candidat pour lequel la fonction de coût atteint un optimum ;
- allocation au demandeur des services du candidat qui optimise la fonction de coût.

En effet, un tel procédé de choix permet de trouver une solution à cette requête en prenant en compte le niveau de satisfaction attendu, par exemple au regard d'exigences de sécurité et de priorité, par la mise en oeuvre d'un calcul de score global tenant compte d'un taux de satisfaction offert par un candidat au regard de la requête du demandeur.

Suivant d'autres aspects avantageux de l'invention, le procédé comporte une ou plusieurs des caractéristiques suivantes, prise(s) isolément ou suivant toutes les combinaisons techniquement possibles :

- un lien est un service de transport de données et en ce qu'un nœud est un service de stockage et/ou un service de calcul et/ou un service applicatif ;
- les services sont répertoriés au sein d'un catalogue, le nombre de services et/ou les attributs des services étant susceptible de varier au cours du temps ;
- le ou chaque fournisseur de services comporte des services alloués et des services non-alloués, la requête comporte une information relative à la priorité de ladite requête, le procédé comportant en outre les étapes de :

  - identification des services alloués suite à des requêtes antérieures parmi la pluralité de services ;
  - première recherche, pour la ou chaque composante de la requête, de l'existence, parmi les services non-alloués, de services satisfaisant la composante ;
  - si, parmi les services non-alloués, il n'existe pas de service satisfaisant au moins une première composante de la requête, pour chaque première composante de la requête, deuxième recherche de l'existence de services satisfaisant la première composante parmi les services alloués à des requêtes antérieures présentant une priorité inférieure ou égale à la priorité de la nouvelle requête ;
  - désallocation de tout ou partie des services alloués qui satisfont la première composante de la requête ;

- au moins un service présente un attribut choisi parmi l'ensemble consistant en : le délai, la bande-passante, le débit, la gigue, le taux de perte, l'espace de stockage, la fréquence de calcul de processeur, la disponibilité, le facteur de robustesse, le fournisseur du service, l'emplacement de la ressource propre à fournir le service, le coût de configuration du service et le prix, ou un attribut de sécurité choisi parmi l'ensemble consistant en : le niveau de sécurisation, les caractéristiques de l'algorithme de chiffrement, les caractéristiques de l'algorithme d'authentification, les caractéristiques de l'algorithme de confidentialité le ou les pays, régions et/ou fournisseurs de services exclus et la taille de clé de chiffrement ;
- l'étape de construction d'un ensemble de candidats comprend la génération aléatoire de chaque candidat, chaque service de chaque candidat satisfaisant la composante correspondante de la requête ;
- le procédé comporte l'étape d'écriture dans une mémoire des liens de connectivité existant entre les différents services ;
- la requête comporte au moins une contrainte formant une condition relative à des services correspondant à aux moins deux composantes distinctes de ladite requête ;
- les contraintes associées à au moins deux composantes de la requête comprennent des contraintes relatives aux liens entre les nœuds correspondant à chaque composante, et/ou des contraintes de placement relatif entre des liens et/ou des nœuds correspondant à chaque composante ;
- l'étape de construction d'un ensemble de candidats comprend :

  - la sélection d'un pourcentage prédéterminé de candidats parmi les candidats pour lesquels la fonction de coût est le plus proche d'un optimum, pour former une génération-mère de candidats ;
  - le calcul d'au moins un nouveau candidat à partir d'au moins un candidat de la génération-mère, le calcul comprenant :

    - le choix d'un candidat de la génération-mère ;
    - pour chaque service du candidat choisi de la génération-mère, associé à une composante de la requête qui ne comporte pas de contrainte, le remplacement du service par un service choisi de façon aléatoire parmi les services qui satisfont la composante ;
    - pour chaque autre service, le remplacement du service par un service choisi de façon aléatoire parmi les services qui satisfont au moins les mêmes contraintes de la composante que le service correspondant du candidat choisi de la génération-mère ;

- l'étape d'évaluation comprend la pénalisation du score global d'un candidat si au moins une contrainte n'est pas satisfaite par un service du candidat ;
- l'étape d'évaluation comprend la pénalisation du score global d'un candidat si, pour au moins une contrainte non satisfaite par un service du candidat, la différence entre le niveau de satisfaction attendu et le niveau de satisfaction fourni par ledit service est supérieure ou égale à un seuil, le seuil étant défini par le demandeur ou calculé selon des règles prédéterminées ;
- le procédé comporte en outre, pour chaque service, une étape d'écriture, dans une mémoire :

- pour chaque attribut, d'un mode de calcul d'un taux de satisfaction ;
- pour chaque attribut, d'une fonction d'utilité pour le calcul d'un score de l'attribut pour une valeur donnée de taux de satisfaction ;
- pour chaque attribut, d'un poids propre ;
- pour chaque n-uplet d'attributs, d'un poids conjoint ;
- de la fonction de coût, la fonction de coût étant de la forme :

$$C(X) = \sum_{I(\{i,j\})<0} \min\left(u_i(x_i)u_j(x_j)\right).I(\{i,j\}) + \sum_{I(\{i,j\})<0} \max\left(u_i(x_i)u_j(x_j)\right).|I(\{i,j\})|$$

$$+ \sum_{i=1}^{n} u_i(x_i).\left(\phi_i - \frac{1}{2}\sum_{j\neq i}|I(\{i,j\})|\right)$$

où min est l'opérateur minimum, max est l'opérateur maximum, X est un vecteur associé à un candidat, chaque élément du vecteur X correspondant à un service du candidat et étant égal au taux de satisfaction d'une composante de la requête par le service correspondant, où $x_i$, $x_j$ sont respectivement le taux de satisfaction de la composante relative à l'attribut i et de la composante relative à l'attribut j, et où $u_i$, est la fonction d'utilité relative à l'attribut i, $\Phi_i$ est le poids propre relative à l'attribut i, $I(\{i,j\})$ le poids conjoint relatif aux attributs i, j et $|I(\{i,j\})|$ désigne la valeur absolue du poids conjoint $I(\{i,j\})$.

L'invention a également pour objet un dispositif de choix d'au moins un service propre à être fourni par un réseau de télécommunications parmi une pluralité de services prédéterminés et comprenant chacun au moins un attribut, le dispositif comportant des moyens de calcul associés à des moyens de stockage pour mettre en œuvre le procédé tel que défini ci-dessus.

L'invention sera mieux comprise à l'aide de la description qui va suivre, donnée uniquement à titre d'exemple non limitatif et faite en se référant aux dessins annexés sur lesquels :

- la figure 1 est une représentation schématique d'un dispositif selon l'invention ;
- la figure 2 est une représentation schématique d'une configuration de services réseaux correspondant à une requête exprimée par un demandeur ;
- la figure 3 est un organigramme d'une première partie d'un procédé de calcul d'une solution selon l'invention; et
- la figure 4 est un organigramme d'une deuxième partie du procédé de la figure 3.

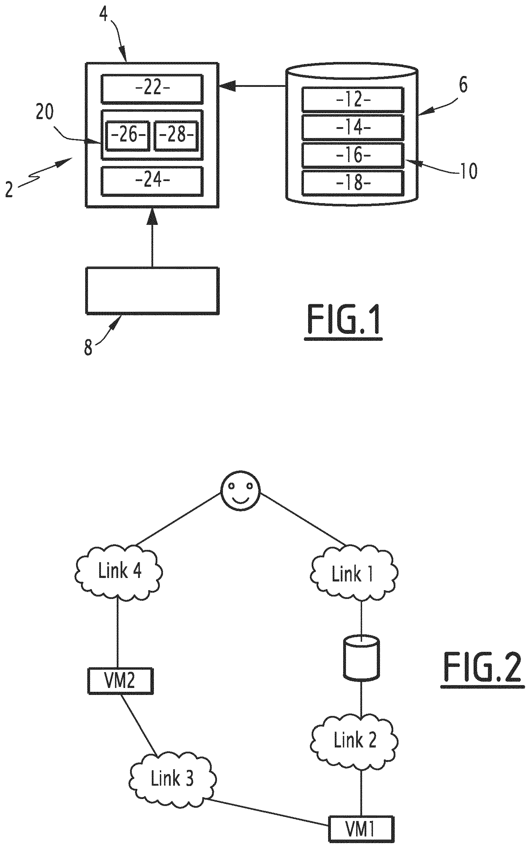

Sur la figure 1 est représenté un dispositif 2 de choix d'au moins un service selon l'invention.

Le dispositif 2 est propre à recevoir une requête relative à des services et à calculer, parmi une pluralité de services accessibles via un réseau de télécommunications, une solution composée d'un ensemble de services satisfaisant la requête.

Les services forment au moins une partie du réseau de télécommunications, une partie des services étant des nœuds du réseau de télécommunications et une autre partie des services étant des liens entre lesdits nœuds.

Un lien est de préférence un service de transport de données. En outre, un nœud est de préférence un service de stockage, un service de calcul ou encore un service applicatif.

Lesdits liens et lesdits nœuds sont par exemple fournis par des fournisseurs de services et répertoriés au sein d'un catalogue. Les propriétés des services ainsi que leur nombre est susceptible de varier au cours du temps.

Par « requête », on entend un ensemble de conditions déterminées par un demandeur qui définissent au moins un service dont le demandeur souhaite bénéficier, ainsi que, pour tout ou partie des services, un niveau de satisfaction souhaité pour le ou chaque service.

Par exemple, comme illustré par la figure 2, suite à une requête d'un demandeur, le dispositif 2 est propre à choisir une première machine virtuelle VM1, une deuxième machine virtuelle VM2 et un espace de stockage, reliés entre eux et au demandeur par des liens réseau Link 1, Link 2, Link 3 et Link 4.

La première machine virtuelle VM1, la deuxième machine virtuelle VM2 et l'espace de stockage sont des nœuds du réseau, tandis que les liens réseau Link 1, Link 2, Link 3 et Link 4 sont des liens du réseau.

Comme illustré par la figure 1, le dispositif 2 comporte une unité de traitement 4, formant des moyens de calcul, reliée à une base de données 6, formant des moyens de stockage, et à une interface de saisie 8.

L'unité de traitement 4 est adaptée pour calculer une solution propre à répondre à une requête saisie par un demandeur via l'interface de saisie 8. La base de données 6 est adaptée pour stocker une pluralité de tables 10.

La base de données 6 comprend une table des services 12, une table 14 des services alloués, une table 16 des liens de connectivité et une table de calcul 18.

La table des services 12 est adaptée pour stocker un descriptif de chaque service. Chaque descriptif est propre à un service correspondant. Chaque service est identifié par un identifiant unique. Avantageusement, les descriptifs stockés dans la table des services 12 présentent une structure indépendante du service considéré et commune à l'ensemble des services.

Chaque descriptif présente une pluralité de champs, chaque champ étant relatif à un attribut. Par « attribut », on entend l'une des caractéristiques que présente un service. Les attributs d'un service sont par exemple, et de manière non limitative, des caractéristiques techniques du service, telles qu'un délai, une bande-passante, un débit, une gigue, un taux de perte, un espace de stockage, une fréquence de calcul de processeur, une disponibilité, un facteur de robustesse, le fournisseur du service, l'emplacement de la ressource propre à fournir le service (c'est-à-dire un pays, une région ou un fournisseur), un coût de configuration du service et un prix.

En outre, les attributs d'un service comprennent par exemple, et de manière non limitative, un niveau de sécurisation, les caractéristiques d'un algorithme de chiffrement, les caractéristiques d'un algorithme d'authentification, les caractéristiques d'un algorithme de confidentialité, une taille de clé de chiffrement, le ou les pays, régions et/ou fournisseurs de services exclus. De tels attributs sont dits « de sécurité ».

Chaque attribut est identifié par un identifiant unique.

Pour chaque service, la valeur prise par chaque attribut est propre au service. Par exemple, pour un service donné ne présentant pas un attribut donné, le champ correspondant est vide.

Chaque service appartient à une classe de services. Les services d'une même classe présentent des caractéristiques techniques communes. De telles classes sont par exemple, et de manière non limitative, des services de sécurité, des services de stockage, des services de machines virtuelles, ou encore des services de connectivité réseau.

La table 14 des services alloués est propre à stocker l'identifiant des services alloués au demandeur ou à d'autres demandeurs suite à des requêtes antérieures.

De préférence, pour chaque service alloué, la table 14 est adaptée pour stocker la valeur d'un indicateur de la priorité de la requête à la suite de laquelle le service a été alloué.

De façon optionnelle, pour chaque service alloué, la table 14 est adaptée pour stocker la charge associée au service, c'est-à-dire une mesure de son utilisation.

La table 16 des liens de connectivité est propre à stocker les liens réseau existant entre les différents services. Par exemple, pour chacune des entrées de la table des liens 16, la table des liens 16 comprend un premier champ et un deuxième champ. Le premier champ comprend l'identifiant d'un premier service, et le deuxième champ comprend l'identifiant de tous les deuxièmes services pour lesquelles il existe une connectivité réseau avec le premier service.

Le contenu de la table de calcul 18 sera décrit ultérieurement.

Avantageusement, les tables 10 de la base de données 6 sont mises à jour à chaque modification du catalogue du ou de chaque fournisseur de services.

L'unité de traitement 4 comporte une mémoire 20, un processeur 22, et un émetteur-récepteur 24. La mémoire 20 est adaptée pour stocker une pluralité de logiciels. Le processeur 22 est propre à exécuter les logiciels stockés dans la mémoire 20. En particulier, la mémoire 20 est adaptée pour stocker un logiciel de lecture 26 et un logiciel de calcul 28. L'émetteur-récepteur 24 est propre à recevoir les requêtes saisies via l'interface de saisie 8.

L'unité de traitement 4 est en outre reliée à un réseau de télécommunications pour identifier les services que le réseau est propre à fournir. L'unité de traitement 4 est en outre propre à déterminer la charge associée à chaque service.

Le logiciel de lecture 26 est adapté pour lire le contenu de la base de données 6, en particulier pour lire le contenu de chacune des tables 10 de la base de données 6. Le logiciel de calcul 28 est adapté pour calculer une solution, lorsqu'elle existe, à la requête saisie par le demandeur via l'interface de saisie 8.

De préférence, le logiciel de calcul 28 est adapté pour déterminer une solution, formée par un ensemble de services, telle que la charge est répartie entre les différents services. En particulier, le logiciel de calcul 28 est propre à déterminer, pour une requête donnée, une solution qui minimise la variance de la charge sur l'ensemble des services qui satisfont la requête du demandeur.

Chaque requête comprend une pluralité de composantes. Chaque composante est relative à une classe de service souhaitée. Pour chaque composante, chaque requête comporte en outre au moins un critère. Chaque critère est relatif aux attributs attendus pour un service de la classe associée à ladite composante.

En outre, chaque requête comporte par exemple au moins une contrainte relative à aux moins deux services.

Par « contrainte », il est entendu, au sens de la présente invention, une condition portant sur la valeur d'un attribut commun à au moins deux services distincts.

Par exemple, chaque requête comprend au moins une contrainte relative à la connectivité entre au moins deux services, ou encore au placement relatif des ressources fournissant au moins deux services.

Pour chaque critère et pour chaque contrainte, la requête comprend également le niveau de satisfaction attendu, ainsi qu'une indication relative au respect strict ou non du niveau de satisfaction attendu, par le service correspondant.

Par « service présentant une satisfaction attendue stricte », on entend un service pour lequel le service fourni ne peut conduire à une valeur de niveau de satisfaction qui est inférieure à la valeur du niveau de satisfaction demandé.

En variante, l'indication relative au respect strict ou non du niveau de satisfaction attendu, par le service correspondant, est déterminée par le dispositif 2 selon des règles par exemple définies par un administrateur.

Par exemple, sont autorisés les services pour lesquels la différence entre le niveau de satisfaction attendu et le niveau de satisfaction fourni par ledit service est inférieur ou égale à un seuil, le seuil étant défini par le demandeur ou calculé selon des règles prédéterminées.

Chaque requête comprend également un indicateur de la priorité de la requête. En outre, chaque requête comprend un niveau de satisfaction attendu par composante et/ou par groupe de composantes. Par exemple, chaque requête comprend en outre un objectif, tel que défini ultérieurement.

Au cours d'une étape initiale de configuration, chaque service est enregistré dans la table des services 12. En particulier, chaque service est identifié par un identifiant unique, et associé à un descriptif comportant les valeurs des attributs du service.

En outre, au cours de l'étape initiale, un administrateur définit, pour chaque attribut, des règles relatives aux modes de calcul de la satisfaction d'un critère d'une requête par un service ou une pluralité de services, une telle satisfaction étant encore appelée « taux de satisfaction ».

De telles règles comportent par exemple des modes de calcul de la valeur des attributs d'une pluralité de services joints. De tels modes comportent par exemple :

- la comparaison de deux valeurs d'attributs entre elles : par exemple l'utilisation des opérateurs strictement supérieur, strictement inférieur, inférieur ou égal, supérieur ou égal ;
- la composition de deux valeurs d'attributs entre elles : par exemple l'addition, la multiplication, l'utilisation d'un opérateur maximum, l'utilisation d'un opérateur minimum, etc. ;
- la décomposition de deux valeurs d'attributs entre elles : par exemple la soustraction, la division, l'utilisation d'un opérateur maximum, l'utilisation d'un opérateur minimum, etc.

Au cours de l'étape initiale, l'administrateur définit également une pluralité de fonctions de coût, encore appelées « fonctions-objectifs », telles que définies ultérieurement, et une pluralité de coefficients, et écrit les fonctions et les coefficients dans la table de calcul 18.

La définition d'une fonction-objectif se fait comme suit. Pour chaque attribut d'identifiant i, l'administrateur définit une fonction d'utilité $u_i$ correspondante. Chaque fonction d'utilité $u_i$ a pour variable un taux $x^k_i$. Le taux $x^k_i$, encore appelé « taux de satisfaction », est une mesure, pour l'attribut d'identifiant i d'un service k, de l'atteinte du niveau de satisfaction attendu pour un critère donné de la requête.

En outre, pour chaque attribut i, l'administrateur écrit dans la table de calcul 18 un poids $\Phi_i$ propre à l'attribut d'identifiant i.

En outre pour chaque n-uplet {i,j,...} d'attributs comportant au moins deux attributs distincts i, j, l'administrateur écrit dans la table de calcul 18 un poids conjoint $I(\{i,j,..\})$.

Par « n-uplet », on entend un vecteur comportant les identifiants d'au moins deux attributs de services.

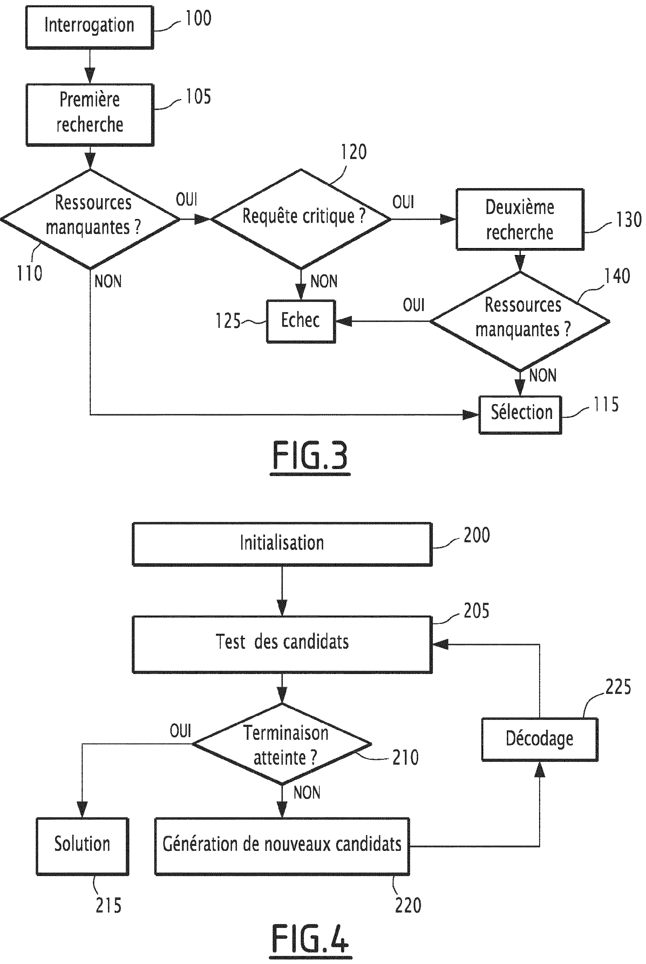

Le procédé de choix d'au moins un service selon l'invention va maintenant être décrit au regard des figures 3 et 4.

Au cours d'une étape 100 d'interrogation, le demandeur saisit une requête via l'interface de saisie 8. De façon optionnelle, le demandeur choisit une fonction-objectif parmi les fonctions-objectifs prédéfinies par l'administrateur. En variante, la fonction-objectif dépend du demandeur et/ou de l'état du système, selon une règle prédéterminée par l'administrateur.

Par exemple, chaque requête est stockée dans le dispositif 2 sous la forme d'un vecteur de composantes, la position de chaque composante dans ledit vecteur formant un identifiant de ladite composante.

Au cours d'une étape suivante de première recherche 105, pour chaque composante de la requête, le logiciel de lecture 26 lit la table des services 12 et la table 14 des services alloués.

Pour chaque service non-alloué de la table des services 12, c'est-à-dire dont l'identifiant est absent de la table 14 des services alloués, le logiciel de calcul 28 détermine si le service est propre à satisfaire la composante considérée, c'est-à-dire satisfaire la composante et les critères associés.

Au cours d'une étape suivante 110, le logiciel de calcul 28 détermine si, pour chaque composante, il existe au moins un service parmi les services non-alloués qui est propre à satisfaire la composante.

Si, pour chaque composante, il existe au moins un service parmi les services non-alloués qui est propre à satisfaire la composante, alors au cours d'une étape suivante 115 de sélection, le logiciel de calcul 28 calcule une combinaison de services qui satisfait au mieux à la requête. L'étape de sélection 115 sera décrite ultérieurement.

Si, pour au moins une composante, encore appelée « composante non satisfaite », il n'existe pas de service parmi les services non-alloués qui est propre à satisfaire la composante au regard du niveau de satisfaction attendu par le demandeur, ou si, au cours de l'étape de sélection 115, le logiciel de calcul 28 ne parvient pas à déterminer une combinaison de services satisfaisant la requête, alors, au cours d'une étape suivante 120, le logiciel de calcul 28 détermine si la valeur de la priorité de la requête est supérieure ou égale à un seuil prédéterminé.

Si la valeur de la priorité de la requête est inférieure au seuil prédéterminé, alors, au cours d'une étape suivante 125, le dispositif de calcul 2 émet un message d'erreur à destination du demandeur.

Si la valeur de la priorité de la requête est supérieure ou égale au seuil prédéterminé, alors, au cours d'une étape suivante 130 de deuxième recherche, le logiciel de lecture 26 lit la table 14 des services alloués. Le logiciel de calcul 28 détermine si, pour chaque composante non satisfaite, il existe au moins un service parmi les services alloués qui est propre à satisfaire la composante. Le logiciel de calcul 28 retient alors, pour le calcul d'une solution en réponse à la requête du demandeur, le ou chaque service parmi les services alloués qui est propre à satisfaire ladite composante.

S'il existe au moins une composante non satisfaite pour laquelle il n'existe pas de service parmi les services alloués qui soit propre à satisfaire la composante non satisfaite, alors, au cours d'une étape suivante 120, le dispositif de calcul 2 émet un message d'erreur conformément à l'étape 125.

Avantageusement, au cours de l'étape 130 de deuxième recherche, le logiciel de calcul 28 trie, par ordre de priorité, les services dont un identifiant est stocké dans la table 14 des services alloués. Puis le logiciel de calcul 28 cherche, en commençant par les services alloués suite aux requêtes dont la priorité est la plus faible, les services qui satisfont les composantes non satisfaites. L'étape de recherche s'interrompt dès que, pour chaque composante non satisfaite, le logiciel de calcul 28 trouve un service satisfaisant la composante non satisfaite parmi les services qui ont été alloués suite à une requête dont la priorité est inférieure à la priorité de la requête courante.

L'étape de sélection 115 va maintenant être décrite au regard de la figure 4.

Au cours d'une étape d'initialisation 200, le logiciel de calcul 28 crée une pluralité de candidats formant un ensemble appelé « génération de candidats ».

Par « candidat », on entend un ensemble de services représentant une solution potentielle au regard de la requête du demandeur. Chaque candidat est par exemple un n-uplet comportant au moins un identifiant unique d'un service. En particulier, chaque candidat, pour chaque composante de la requête, comprend un identifiant unique d'un service satisfaisant la composante de la requête et les critères associés, encore appelé « service candidat ».

Par exemple pour une composante donnée de la requête, le service correspondant du candidat est choisi de façon aléatoire parmi les services satisfaisant la composante et les critères associés.

En particulier, les candidats sont générés comme suit. Pour chaque composante de la requête, le logiciel de calcul 28 choisit de façon aléatoire un service candidat parmi les services non alloués.

Si, pour la composante considérée, la requête comprend des contraintes, alors, pour chaque autre composante, encore appelée « composante dépendante », de la requête qui présente une relation, via la contrainte, avec la composante considérée, alors le logiciel de calcul 28 choisit de façon aléatoire un service candidat pour la composante dépendante qui satisfait la composante dépendante et la contrainte.

Chaque candidat est par exemple stocké dans le dispositif 2 sous la forme d'un vecteur d'identifiants uniques de services. Par exemple, la position de chaque élément du vecteur correspond à l'identifiant de la composante correspondante de la requête.

En outre, au cours de l'étape d'initialisation 200, le logiciel de calcul 28 identifie la fonction-objectif choisie par le demandeur. En variante, l'identification dépend par exemple du demandeur, de l'état des services, ou de toute autre politique définie par l'administrateur.

La fonction-objectif est adaptée pour calculer un score global pour chaque candidat. La fonction-objectif intègre les fonctions d'utilité $u_i$, les poids propres $\Phi_i$ et les poids conjoints $I(\{i,j,...\})$, relatifs aux attributs i, j sur lesquels porte la requête.

Par exemple, la fonction-objectif s'écrit :

$$C(X) = \sum_{I(\{i,j\})<0} \min\left(u_i(x_i); u_j(x_j)\right).I(\{i,j\}) + \sum_{I(\{i,j\})<0} \max\left(u_i(x_i); u_j(x_j)\right).|I(\{i,j\})|$$

$$+ \sum_{i=1}^{n} u_i(x_i).\left(\phi_i - \frac{1}{2}\sum_{j\neq i}|I(\{i,j\})|\right)$$

où min est l'opérateur minimum, max est l'opérateur maximum, X est un vecteur associé à un candidat, chaque élément du vecteur X correspondant à un service du candidat et étant égal au taux de satisfaction d'un critère de la requête par le service correspondant, où $x_i$, $x_j$ sont respectivement le taux de satisfaction de la composante relative à l'attribut i et de la composante relative à l'attribut j, et où $u_i$, est la fonction d'utilité relative à l'attribut i, $\Phi_i$ est le poids propre relative à l'attribut i, $I(\{i,j\})$ le poids conjoint relatif aux attributs i, j tels que définis précédemment et $|I(\{i,j\})|$ désigne la valeur absolue du poids conjoint $/(\{i,j\})$. Une telle fonction-objectif est encore appelée « intégrale de Choquet ».

Au cours d'une étape suivante 205 de test, le logiciel de calcul 28 enregistre, pour chaque candidat, le score global déterminé au cours d'une étape 225 décrite ultérieurement. Le score global est par exemple représentatif du niveau de satisfaction des critères de la requête par le candidat et de la valeur de la fonction-objectif pour le candidat. En particulier, le logiciel de calcul 28 enregistre le candidat pour lequel la fonction-objectif atteint un optimum.

Au cours d'une étape suivante 210, si une règle de terminaison prédéterminée est satisfaite, alors, au cours d'une étape finale 215, le dispositif de choix 2 transmet par exemple le candidat qui optimise la fonction-objectif à une unité d'allocation des services (non représenté).

Si le candidat comporte des services alloués, l'unité d'allocation désalloue tout ou partie des services alloués, et les alloue au demandeur ayant saisi la requête.

Une telle règle de terminaison est par exemple l'atteinte du niveau de satisfaction espéré par le demandeur. En outre, une telle règle de terminaison est par exemple l'atteinte d'un nombre maximal de cycles de calcul. En variante, une telle règle de terminaison est l'atteinte d'une variation relative minimale de la valeur prise par la fonction-objectif entre la meilleure solution globale (c'est-à-dire la solution ayant le meilleur score de fonction-objectif sur tous les cycles précédents) et la meilleure solution trouvée à l'issue du cycle en cours.

Si la règle de terminaison n'est pas satisfaite, alors, au cours d'une étape suivante 220, le logiciel de calcul 28 crée une nouvelle pluralité de candidats, appelée « génération-fille ».

Par exemple, le logiciel de calcul 28 crée au moins une partie des candidats de la génération-fille conformément à l'étape d'initialisation 200.

Par exemple, la génération-fille comporte un pourcentage prédéterminé des candidats de la génération précédente, dite « génération-mère ». Les candidats de la génération-mère qui appartiennent à la génération-fille sont les candidats dont le score global est meilleur que le score global des autres candidats au regard de la fonction-objectif à optimiser.

De préférence, au moins un candidat de la génération-fille dépend d'au moins un candidat de la génération précédente, encore appelée « génération-mère ». Par exemple, le logiciel de calcul 28 crée au moins un candidat de la génération-fille par modification d'un candidat de la génération-mère, ou par croisement d'au moins deux candidats de la génération-mère.

Par modification, on entend le choix arbitraire d'un premier service du candidat et son remplacement par un deuxième service qui satisfait également le ou les critères, dont la satisfaction espérée est stricte, que satisfait le premier service.

Par croisement, on entend le remplacement d'une pluralité de services d'un premier candidat satisfaisant la requête par les services correspondants d'un deuxième candidat satisfaisant la requête.

L'algorithme de création de candidats de la génération-fille à partir de candidats de la génération-mère est par exemple un algorithme génétique classiquement connu.

Au cours d'une étape suivante 225 de décodage, le logiciel de lecture 26 lit la table des liens 16, et le logiciel de calcul 28 détermine, pour chaque candidat de la génération-fille, si les liens de connectivité entre les services satisfont les contraintes relatives aux composantes correspondantes de la requête.

Par exemple, les candidats dont les services ne satisfont pas les contraintes de connectivités de la requête, et/ou les contraintes pour lesquelles le taux de satisfaction espéré est de 100%, sont pénalisés. Par exemple, dans le cas d'une fonction-objectif à maximiser, un score global faible est attribué à de tels candidats.

Puis le logiciel de calcul 28 calcule le score global de chaque candidat de la génération-fille. Puis le logiciel de calcul 28 enregistre ledit score global, conformément à l'étape de test 205.

En variante, au cours de l'étape 220, les modifications des candidats tient compte des connectivités enregistrées dans la table des liens 16.

Les modifications et les croisements tiennent compte des contraintes entre les composantes de la requête.

Pour les modifications, si un premier service à remplacer est associé à une composante de la requête présentant des composantes dépendantes, alors le premier service est remplacé par un deuxième service qui satisfait au moins les mêmes contraintes relatives aux composantes dépendantes que le premier service.

Pour les croisements, si chaque service d'un premier ensemble de services à remplacer est associé à une composante de la requête présentant des composantes dépendantes, alors le premier ensemble de services est remplacé par un deuxième ensemble de services, tel que chaque service du deuxième ensemble satisfait, pour la composante correspondante de la requête, au moins les mêmes contraintes relatives aux composantes dépendantes que le service associé du premier service ensemble.

En variante, l'algorithme de création est un algorithme des fourmis classiquement connu.

Le procédé de choix selon l'invention permet le traitement d'exigences de sécurité, de priorité et de satisfaction grâce à la définition de modes de calcul de taux de satisfaction des services au regard d'une requête formulée par un demandeur.

En outre, la solution fournie à l'issue du procédé est optimale ou quasi-optimale, du fait de la mise en œuvre d'une fonction-objectif, la solution fournie étant une solution qui optimise, quand cela est possible, la fonction objectif.

En outre, la désallocation de services préalablement alloués au profit de requêtes présentant un niveau de priorité élevé améliore les chances de trouver une solution de satisfaire une requête prioritaire.

La mise en œuvre de contraintes relatives à des relations entre services permet de favoriser ou de défavoriser certains candidats en fonction d'un politique de choix du demandeur, par exemple une politique relative à la connectivité entre les services (par exemple, le demandeur ne souhaite pas que tous les services soient fournis par un même fournisseur du réseau de télécommunications) ou encore une politique relative au placement (par exemple, le demandeur ne souhaite pas qu'un service soit fourni par une ressource informatique située dans une zone géographique donnée).

La mise en œuvre d'une génération aléatoire de candidats permet une grande variété desdits candidats, ce qui accroît les chances de convergence vers une solution optimale au regard de la fonction-objectif.

L'écriture dans, une mémoire, des liens de connectivité existant entre les différents services permet un traitement rapide desdits liens de connectivité, notamment au moment de la construction des candidats.

En outre, le stockage en mémoire desdits liens de connectivité autorise également un traitement rapide des contraintes de dépendance. Par exemple, lors de la génération d'une nouvelle génération de candidats à partir d'une génération précédente dont les candidats satisfont les contraintes de connectivité de la requête, la présence en mémoire des liens de connectivité permet de créer de nouveaux candidats conservant les liens de connectivité des candidats de la génération précédente. Ceci permet donc une convergence plus rapide vers une solution optimale en évitant la génération de nouveaux candidats qui ne satisfont pas aux contraintes de connectivité, et qui ne représentent donc pas des solutions potentielles au regard de la requête.

En outre, la pénalisation du score global d'un candidat si les contraintes de dépendance ne sont pas satisfaites par au moins un service du candidat permet, dans la mise en œuvre d'algorithmes génétiques ou d'algorithmes des fourmis, une convergence plus rapide vers une solution qui satisfait la requête.

## Revendications

1. Procédé de choix d'au moins un service parmi une pluralité de services prédéterminés propres à être fournis par un réseau de télécommunications, chaque service prédéterminé comprenant au moins un attribut, le procédé étant mis en œuvre par un ordinateur comportant un logiciel de calcul (28) et étant **caractérisé en ce qu'**il comporte les étapes de :

   - réception, par le logiciel de calcul (28), d'une requête saisie par un demandeur, la requête comportant au moins une composante relative à une classe de services prédéterminés, les services prédéterminés d'une même classe présentant des caractéristiques techniques communes, la requête comprenant en outre une indication relative à un niveau de satisfaction attendu relatif à la satisfaction d'au moins un attribut d'une composante de la requête ;
   - pour chaque composante de la requête, identification, par le logiciel de calcul (28), des services de ladite pluralité de services prédéterminés propres à satisfaire ladite composante ;
   - construction, par le logiciel de calcul (28), d'un ensemble de candidats, chaque candidat comprenant au moins un service, le ou chaque service de chaque candidat étant un service identifié comme propre à satisfaire au moins une composante de la requête ;
   - évaluation de chaque candidat de l'ensemble de candidats par le logiciel de calcul (28), l'évaluation comprenant :

      - pour chaque service du candidat considéré, le calcul d'un taux de satisfaction ($x^k_i$) de chacun des attributs dudit service au regard de la requête, par un mode de calcul de taux de satisfaction prédéterminé ; et,
      - le calcul d'un score global du candidat considéré par une fonction de coût prédéterminée, en fonction du taux de satisfaction ($x^k_i$) d'au moins un service du candidat considéré au regard du niveau de satisfaction attendu ;

   - identification du candidat parmi l'ensemble de candidats pour lequel le score calculé de la fonction de coût atteint un optimum ; et,
   - allocation au demandeur du ou de chaque service du candidat identifié comme optimisant la fonction de coût.

2. Procédé selon la revendication 1, **caractérisé en ce qu'**une partie des services de ladite pluralité de services prédéterminés étant un lien et l'autre partie des services de ladite pluralité de services prédéterminés étant un nœud, un lien est un service de transport de données et un nœud est un service de stockage et/ou un service de calcul et/ou un service applicatif.

3. Procédé selon la revendication 1 ou 2, **caractérisé en ce que** les services sont répertoriés au sein d'un catalogue, le nombre de services et/ou les attributs des services étant susceptible de varier au cours du temps.

4. Procédé selon l'une quelconque des revendications précédentes, **caractérisé en ce que** le ou chaque fournisseur de services comporte des services alloués et des services non-alloués, **en ce que** la requête comporte une information relative à la priorité de ladite requête, le procédé comportant en outre les étapes de :

   - identification des services alloués suite à des requêtes antérieures parmi la pluralité de services ;
   - première recherche (105), pour la ou chaque composante de la requête, de l'existence, parmi les services non-alloués, de services satisfaisant la composante ;
   - si, parmi les services non-alloués, il n'existe pas de service satisfaisant au moins une première composante de la requête, pour chaque première composante de la requête, deuxième recherche (130) de l'existence de services satisfaisant la première composante parmi les services alloués à des requêtes antérieures présentant une priorité inférieure ou égale à la priorité de la nouvelle requête ;
   - désallocation de tout ou partie des services alloués qui satisfont la première composante de la requête.

5. Procédé selon l'une quelconque des revendications précédentes, **caractérisé en ce qu'**au moins un service présente un attribut choisi parmi l'ensemble consistant en : le délai, la bande-passante, le débit, la gigue, le taux de perte, l'espace de stockage, la fréquence de calcul de processeur, la disponibilité, le facteur de robustesse, le fournisseur du service, l'emplacement de la ressource propre à fournir le service, le coût de configuration du service et le prix, ou un attribut de sécurité choisi parmi l'ensemble consistant en : le niveau de sécurisation, les caractéristiques de l'algorithme de chiffrement, les caractéristiques de l'algorithme d'authentification, les caractéristiques de l'algorithme de confidentialité le ou les pays, régions et/ou fournisseurs de services exclus et la taille de clé de chiffrement.

6. Procédé selon l'une quelconque des revendications précédentes, **caractérisé en ce que** l'étape de construction d'un ensemble de candidats comprend la génération aléatoire de chaque candidat, chaque service de chaque candidat satisfaisant la composante correspondante de la requête.

7. Procédé selon l'une quelconque des revendications précédentes, **caractérisé en ce qu'**il comporte l'étape d'écriture dans une mémoire (16) des liens de connectivité existant entre les différents services.

8. Procédé selon l'une quelconque des revendications précédentes, caractérisé en ce la requête comporte au moins une contrainte formant une condition relative à des services correspondant à aux moins deux composantes distinctes de ladite requête.

9. Procédé selon la revendication 8, **caractérisé en ce que** les contraintes associées à au moins deux composantes de la requête comprennent des contraintes relatives aux liens entre les nœuds correspondant à chaque composante, et/ou des contraintes de placement relatif entre des liens et/ou des nœuds correspondant à chaque composante.

10. Procédé selon la revendication 8 ou 9, **caractérisé en ce que** l'étape de construction d'un ensemble de candidats comprend :

   - la sélection d'un pourcentage prédéterminé de candidats parmi les candidats pour lesquels la fonction de coût est le plus proche d'un optimum, pour former une génération-mère de candidats ;
   - le calcul d'au moins un nouveau candidat à partir d'au moins un candidat de la génération-mère, le calcul comprenant :

      - le choix d'un candidat de la génération-mère ;
      - pour chaque service du candidat choisi de la génération-mère, associé à une composante de la requête qui ne comporte pas de contrainte, le remplacement du service par un service choisi de façon aléatoire parmi les services qui satisfont la composante ;
      - pour chaque autre service, le remplacement du service par un service choisi de façon aléatoire parmi les services qui satisfont au moins les mêmes contraintes de la composante que le service correspondant du candidat choisi de la génération-mère.

11. Procédé selon l'une quelconque des revendications 8 à 10, **caractérisé en ce que** l'étape d'évaluation comprend la pénalisation du score global d'un candidat si au moins une contrainte n'est pas satisfaite par un service du candidat.

**12.** Procédé selon l'une quelconque des revendications précédentes, **caractérisé en ce que** l'étape d'évaluation comprend la pénalisation du score global d'un candidat si, pour au moins une contrainte non satisfaite par un service du candidat, la différence entre le niveau de satisfaction attendu et le niveau de satisfaction fourni par ledit service est supérieure ou égale à un seuil, le seuil étant défini par le demandeur ou calculé selon des règles prédéterminées.

**13.** Procédé selon l'une quelconque des revendications précédentes, **caractérisé en ce qu'**il comporte en outre, pour chaque service, une étape d'écriture, dans une mémoire (6) :

- pour chaque attribut (i), d'un mode de calcul d'un taux de satisfaction ($x^k_i$) ;
- pour chaque attribut (i), d'une fonction d'utilité ($u_i$) pour le calcul d'un score ($u_i(x^k_i)$) de l'attribut pour une valeur donnée de taux de satisfaction ($x^k_i$) ;
- pour chaque attribut (i), d'un poids propre ($\Phi_i$) ;
- pour chaque n-uplet d'attributs ({i,j,...}), d'un poids conjoint ($I(\{i,j,...\})$) ;
- de la fonction de coût, la fonction de coût étant de la forme :

$$C(X) = \sum_{I(\{i,j\})<0} \min\left(u_i(x_i)u_j(x_j)\right).I(\{i,j\}) + \sum_{I(\{i,j\})<0} \max\left(u_i(x_i)u_j(x_j)\right).|I(\{i,j\})|$$

$$+ \sum_{i=1}^{n} u_i(x_i).\left(\phi_i - \frac{1}{2}\sum_{j\neq i}|I(\{i,j\})|\right)$$

où min est l'opérateur minimum, max est l'opérateur maximum, X est un vecteur associé à un candidat, chaque élément du vecteur X correspondant à un service du candidat et étant égal au taux de satisfaction d'une composante de la requête par le service correspondant, où $x_i$, $x_j$ sont respectivement le taux de satisfaction de la composante relative à l'attribut i et de la composante relative à l'attribut j, et où $u_i$, est la fonction d'utilité relative à l'attribut i, $\Phi_i$ est le poids propre relative à l'attribut i, $I(\{i,j\})$ le poids conjoint relatif aux attributs i, j et $|I(\{i,j\})|$ désigne la valeur absolue du poids conjoint $I(\{i,j\})$.

**14.** Dispositif (2) de choix d'au moins un service propre à être fourni par un réseau de télécommunications parmi une pluralité de services prédéterminés et comprenant chacun au moins un attribut, le dispositif (2) étant **caractérisé en ce qu'**il comporte des moyens de calcul (4) associés à des moyens de stockage (6) pour mettre en œuvre le procédé selon l'une quelconque des revendications 1 à 13.

**Patentansprüche**

**1.** Verfahren zum Auswählen mindestens eines Diensts aus einer Mehrzahl von vorgegebenen Diensten, die geeignet sind, von einem Telekommunikationsnetz bereitgestellt zu werden, wobei jeder vorgegebene Dienst mindestens ein Attribut aufweist, wobei das Verfahren von einem Computer mit einer Berechnungssoftware (28) ausgeführt wird und **dadurch gekennzeichnet ist, dass** es die folgenden Schritte aufweist:

- Empfangen einer von einem Antragsteller eingegebenen Anfrage durch die Berechnungssoftware (28), wobei die Anfrage mindestens eine Komponente in Bezug auf eine Klasse von vorgegebenen Diensten aufweist, wobei die vorgegebenen Dienste derselben Klasse gemeinsame technische Eigenschaften aufweisen, wobei die Anfrage ferner eine Angabe in Bezug auf einen erwarteten Zufriedenheitsgrad in Bezug auf die Erfüllung mindestens eines Attributs einer Komponente der Anfrage aufweist;
- für jede Komponente der Anfrage die Identifizierung der Dienste der Mehrzahl von vorgegebenen Diensten, die zur Erfüllung der genannten Komponente geeignet sind, durch die Berechnungssoftware (28);
- Konstruktion einer Menge von Kandidaten durch die Berechnungssoftware (28), wobei jeder Kandidat mindestens einen Dienst aufweist, wobei der oder jeder Dienst jedes Kandidaten ein Dienst ist, der als geeignet dafür identifiziert wurde, mindestens eine Komponente der Anfrage zu erfüllen;
- Bewertung jedes Kandidaten der Menge von Kandidaten durch die Berechnungssoftware (28), wobei die Bewertung Folgendes aufweist:

  - für jeden Dienst des betrachteten Kandidaten die Berechnung einer Zufriedenheitsquote ($x^k_i$) von jedem

der Attribute des Dienstes in Bezug auf die Anfrage mittels einer vorgegebenen Zufriedenheitsquoten-Berechnungsweise; und

- die Berechnung eines Gesamtergebnisses des betrachteten Kandidaten durch eine vorgegebene Kostenfunktion, abhängig von der Zufriedenheitsrate ($x^k_i$) mindestens eines Diensts des betrachteten Kandidaten in Bezug auf den erwarteten Zufriedenheitsgrad;

- Identifizierung des Kandidaten in der Menge von Kandidaten, für den das betrachtete Ergebnis der Kostenfunktion ein Optimum erreicht; und

- Zuordnung des oder jedes Kandidaten, der als die Kostenfunktion optimierend identifiziert wurde, zum Antragsteller.

2. Verfahren nach Anspruch 1, **dadurch gekennzeichnet, dass** ein Teil der Dienste der Mehrzahl von vorgegebenen Diensten eine Verbindung ist und der andere Teil der Dienste der Mehrzahl von vorgegebenen Diensten ein Knoten ist, wobei eine Verbindung ein Datentransportdienst ist und ein Knoten ein Speicherdienst und/oder ein Berechnungsdienst und/oder ein Anwendungsdienst ist.

3. Verfahren nach Anspruch 1 oder 2, **dadurch gekennzeichnet, dass** die Dienste in einem Katalog aufgeführt sind, wobei die Anzahl der Dienste und/oder die Attribute der Dienste im Laufe der Zeit variieren können.

4. Verfahren gemäß einem der vorhergehenden Ansprüche, **dadurch gekennzeichnet, dass** der oder jeder Dienstanbieter zugeteilte Dienste und nicht zugeteilte Dienste aufweist, dass die Anfrage Informationen in Bezug auf die Priorität der Anfrage enthält und das Verfahren ferner die folgenden Schritte aufweist:

- Identifizierung der in Folge früherer Anfragen zugeteilter Dienste unter der Mehrzahl von Diensten;
- erste Suche (105) für die oder jede Komponente der Anfrage, nach dem Vorhandensein von Diensten, die die Komponente erfüllen, unter den nicht zugeteilten Diensten;
- wenn es unter den nicht zugeteilten Diensten keinen Dienst gibt, der mindestens eine erste Komponente der Anfrage erfüllt, zweite Suche (130), für jede erste Komponente der Anfrage, nach dem Vorhandensein von Diensten, die die erste Komponente erfüllen, unter den Diensten, die früheren Anfragen mit einer Priorität zugeteilt sind, die kleiner oder gleich der Priorität der neuen Anfrage ist;
- Aufhebung der Zuteilung aller oder eines Teils der zugeteilten Dienste, die die erste Komponente der Anfrage erfüllen.

5. Verfahren nach einem der vorhergehenden Ansprüche, **dadurch gekennzeichnet, dass** mindestens ein Dienst ein Attribut aufweist, das aus der Gruppe ausgewählt ist, bestehend aus: Verzögerung, Bandbreite, Rate, Jitter, Verlustquote, Speicherplatz, Prozessorberechnungsfrequenz, Verfügbarkeit, Robustheitsfaktor, Dienstanbieter, Standort der Ressource zur Bereitstellung des Dienstes, Kosten und Preis der Dienstkonfiguration oder ein Sicherheitsattribut aufweist ausgewählt aus der Gruppe bestehend aus: das Sicherheitsniveau, die Merkmale des Verschlüsselungsalgorithmus, die Merkmale des Authentifizierungsalgorithmus, die Merkmale des Vertraulichkeitsalgorithmus, das Land oder die Länder, Regionen und/oder Dienstanbieter, die ausgeschlossen sind, und die Größe des Verschlüsselungsschlüssels.

6. Verfahren nach einem der vorhergehenden Ansprüche, **dadurch gekennzeichnet, dass** der Schritt des Konstruierens einer Menge von Kandidaten das zufällige Erzeugen jedes Kandidaten aufweist, wobei jeder Dienst jedes Kandidaten die entsprechende Komponente der Anfrage erfüllt.

7. Verfahren nach einem der vorhergehenden Ansprüche, **dadurch gekennzeichnet, dass** es den Schritt des Schreibens von Verbindungen, die zwischen den verschiedenen Diensten existieren, in einen Speicher (16) aufweist.

8. Verfahren nach einem der vorhergehenden Ansprüche, **dadurch gekennzeichnet, dass** die Anfrage mindestens eine Beschränkung aufweist, die eine Bedingung in Bezug auf Dienste bildet, die mindestens zwei verschiedenen Komponenten der Anfrage entsprechen.

9. Verfahren nach Anspruch 8, **dadurch gekennzeichnet, dass** die Beschränkungen, die mindestens zwei Komponenten der Anfrage zugeordnet sind, Beschränkungen, die sich auf die Verbindungen zwischen den Knoten beziehen, die jeder Komponente entsprechen, und/oder Beschränkungen in Bezug auf relative Platzierung zwischen Verbindungen und/oder Knoten, die jeder Komponente entsprechen, aufweisen.

10. Verfahren nach Anspruch 8 oder 9, **dadurch gekennzeichnet, dass** der Schritt des Konstruierens einer Menge von Kandidaten aufweist:

- die Auswahl eines vorgegebenen Prozentsatzes von Kandidaten aus denjenigen, für die die Kostenfunktion einem Optimum am nächsten kommt, um eine Muttergeneration von Kandidaten zu bilden;
- die Berechnung mindestens eines neuen Kandidaten aus mindestens einem Kandidaten der Muttergeneration, wobei die Berechnung aufweist:

- die Auswahl eines Kandidaten aus der Muttergeneration;
- für jeden Dienst des ausgewählten Kandidaten der Muttergeneration, der einer Komponente der Anfrage zugeordnet ist, die keine Beschränkung aufweist, das Ersetzen des Dienstes durch einen Dienst, der nach dem Zufallsprinzip aus den Diensten ausgewählt wird, die die Komponente erfüllen;
- für jeden anderen Dienst, das Ersetzen des Dienstes durch einen Dienst, der zufällig aus Diensten ausgewählt wird, die mindestens die gleichen Beschränkungen der Komponente erfüllen wie der entsprechende Dienst des ausgewählten Kandidaten der Muttergeneration.

11. Verfahren nach einem der Ansprüche 8 bis 10, **dadurch gekennzeichnet, dass** der Bewertungsschritt das Bestrafen der Gesamtpunktzahl eines Kandidaten aufweist, wenn mindestens eine Beschränkung durch einen Dienst des Kandidaten nicht erfüllt ist.

12. Verfahren nach einem der vorhergehenden Ansprüche, **dadurch gekennzeichnet, dass** der Bewertungsschritt das Bestrafen der Gesamtpunktzahl eines Kandidaten aufweist, wenn für mindestens eine Beschränkung, die durch einen Dienst des Kandidaten nicht erfüllt ist, die Differenz zwischen dem erwarteten Zufriedenheitsgrad und dem von dem Dienst gelieferten Zufriedenheitsgrad größer oder gleich einem Schwellenwert ist, wobei der Schwellenwert vom Antragsteller definiert wird oder nach vorgegebenen Regeln berechnet wird.

13. Verfahren nach einem der vorhergehenden Ansprüche, **dadurch gekennzeichnet, dass** es ferner für jeden Dienst einen Schritt aufweist zum Schreiben, in einen Speicher (6):

- für jedes Attribut (i) einer Berechnungsweise einer Zufriedenheitsrate ($x^k_i$);
- für jedes Attribut (i) einer Hilfsfunktion ($u_i$) zum Berechnen einer Punktzahl ($u_i$ ($x^k_i$) des Attributs für einen gegebenen Zufriedenheitsgradwert ($x^k_i$);
- für jedes Attribut (i) eines Eigengewichts ($\Phi_i$);
- für jedes n-Tupel von Attributen ({i,j,...}) eines gemeinsamen Gewichts ($I(\{i,j,...\})$) ;
- der Kostenfunktion, wobei die Kostenfunktion die Form hat:

$$C(X) = \sum_{I(\{i,j\})<0} \min\left(u_i(x_i)u_j(x_j)\right) . I(\{i,j\}) + \sum_{I(\{i,j\})<0} \max\left(u_i(x_i)u_j(x_j)\right) . |I(\{i,j\})|$$
$$+ \sum_{i=1}^{n} u_i(x_i).\left(\phi_i - \frac{1}{2}\sum_{j \neq i} |I(\{i,j\})|\right)$$

wobei min der Minimum-Operator ist, max der Maximum-Operator ist, X ein Vektor ist, der einem Kandidaten zugeordnet ist, wobei jedes Element des Vektors X einem Dienst des Kandidaten entspricht und gleich der Zufriedenheitsrate einer Komponente der Anfrage durch den entsprechenden Dienst ist, wobei $x_i$, $x_j$ die Zufriedenheitsrate der Komponente in Bezug auf das Attribut i bzw. der Komponente in Bezug auf das Attribut j ist, und wobei $u_i$ die Hilfsfunktion in Bezug auf das Attribut i ist, $\Phi_i$ das Eigengewicht ist, das sich auf das Attribut i bezieht, $I(\{i,j\})$ das gemeinsame Gewicht in Bezug auf die Attribute i, j ist und $|I(\{i,j\})|$ den Absolutbetrag des gemeinsamen Gewichts $I(\{i,j\})$ bezeichnet.

14. Vorrichtung (2) zum Auswählen mindestens eines Diensts, der geeignet ist, von einem Telekommunikationsnetz aus einer Mehrzahl von vorgegebenen Diensten bereitgestellt zu werden, die jeweils mindestens ein Attribut aufweisen, wobei die Vorrichtung (2) **dadurch gekennzeichnet ist, dass** sie Berechnungsmittel (4) aufweist, die einer Speichereinrichtung (6) zugeordnet ist, um das Verfahren nach einem der Ansprüche 1 bis 13 durchzuführen.

**Claims**

1. A selection method for selecting at least one service among a plurality of predetermined services that are appropriate for being provided by a telecommunication network, each service comprising at least one attribute, the method being operationally implemented by a computer including a computation software application (28) and being **characterized in that** it includes the following steps of:

   - reception by the computation software application (28) of a request input by a requester, the service request including at least one component relative to a class of predetermined services, the predetermined services of a same class having technical characteristics in common, the request comprising in addition an indication relating to a level of satisfaction expected relating to the satisfaction of at least one attribute of a component of the request;
   - for each component of the request, identification by the computation software application (28) of the services of the plurality of predetermines services best suited to satisfy said component;
   - development by the computation software application (28) of a set of candidates, each candidate including at least one service, the or each service of each candidate being a service identified as capable of satisfying at least one component of the request;
   - evaluation of each candidate of the set of candidates by the computation software application (28), the evaluation including:

     - for each service of the candidate under consideration, the calculation of a rate of satisfaction ($x^k_i$) of each of the attributes of said service with regard to the request, by means of a mode of calculation of a predetermined satisfaction rate;
     - the calculation of an overall score for the candidate under consideration by means of a predetermined cost function, as a function of the satisfaction rate ($x^k_i$) of at least one service of the candidate under consideration with regard to the level of satisfaction expected;

     - identification of the candidate among the set of candidates for which the overall cost of the cost function attains an optimum; and,
     - allocation to the requester of the or each service of the candidate identified as optimising the cost function.

2. A method according to claim 1, **characterised in that** a part of the services of said plurality of predetermined services being a link and another part of the services of said plurality of predetermined services being a node, a link is a data transport service and node is a storage service and/or a computation service and/or an application-based service.

3. A method according to claim 1 or 2, **characterised in that** the services are identified and listed in a catalogue, the number of services and/or the attributes of services are likely to vary over the course of time.

4. A method according to any one of the preceding claims, **characterised in that** the or each service provider has allocated services and unallocated services, and **in that** the request contains an information item relating to the priority of the said request, the method in addition including the following steps of:

   - identification of the services allocated following as a result of previous requests from among the plurality of services;
   - first search (105) for the or each component of the request, to ascertain the existence, among the unallocated services, of services that satisfy the component;
   - if, among the unallocated services, there does not exist any service that satisfies at least a first component of the request, for each first component of the request, second search (130) to ascertain the existence of services that satisfy the first component among the services allocated to previous requests having a priority that is lower than or equal to the priority of the new request;
   - deallocation of all or part of the allocated services that satisfy the first component of the request.

5. A method according to any one of the preceding claims, **characterised in that** at least one service presents an attribute selected from among the set consisting of: the time period, the bandwidth, the throughput or bit rate, the jitter, loss rate, the storage space, the frequency of computation of the processor, the availability, the robustness factor, the provider of the service, the location of the resource capable of providing the service, the cost of configuration of the service and the price; or a security attribute selected from the set consisting of: the level of security, the characteristic features of the encryption algorithm, the characteristic features of the authentication algorithm, the characteristic features of the confidentiality algorithm, the country or countries, regions and/or service providers excluded, and the size of the encryption key.

6. A method according to any one of the preceding claims, **characterised in that** the step of development of a set of candidates includes the random generation of each candidate, each service for each candidate satisfying the corresponding component of the request.

7. A method according to any one of the preceding claims, **characterised in that** it includes the step of writing the connectivity links existing between the various services, to a memory location (16).

8. A method according to any one of the preceding claims, **characterised in that** the request includes at least one constraint forming a condition relative to the services corresponding to at least two distinct components of said request.

9. A method according to claim 8, **characterised in that** the constraints associated with at least two components of the service request include the constraints relating to the links between the nodes corresponding to each component, and/or the constraints of relative placement between the links and/or the nodes corresponding to each component.

10. A method according to claim 8 or 9, **characterized in that** the step of development of a set of candidates includes:

- the selection of a predetermined percentage of candidates from among the candidates for which the cost function is the closest possible to an optimum, in order to form a parent-generation of candidates;
- the computation of at least one new candidate from at least one candidate from the parent-generation, the computing including:

- the selection of a candidate from the parent-generation;
- for each service of the candidate selected from the parent-generation, associated with a component of the request that does not include a constraint, the replacement of the service by a service selected in a random manner from among the services that satisfy the component;
- for every other service, the replacement of the service by a service selected in a random manner from among the services that satisfy at least the same constraints of the component as the corresponding service of the candidate selected from the parent-generation.

11. A method according to any one of claims 8 to 10, **characterised in that** the evaluation step includes the penalization of the overall score of a candidate if at least one constraint is not satisfied by a service of the candidate.

12. A method according to any one of the preceding claims, **characterised in that** the evaluation step includes the penalization of the overall score of a candidate if, for at least one constraint that is not satisfied by a service of the candidate, the difference between the expected level of satisfaction and the level of satisfaction provided by the said service is greater than or equal to a threshold value, the threshold being defined by the requester or calculated in accordance with the predetermined rules.

13. A method according to any one of the preceding claims, **characterised in that** it includes in addition, for each service, a step of writing to a memory location (6):

- for each attribute (i), of a mode of calculation of a rate of satisfaction ($x^k_i$);
- for each attribute (i), of a utility function ($u_i$) for the calculation of a score ($u_i(x,^k_{,i})$) for the attribute for a given value of the satisfaction rate ($x^k_i$);
- for each attribute (i), of a suitable specific weight ($\Phi_i$);
- for each n-tuple of attributes ($\{i, j,...\}$), of a joint weight ($I(\{i, j,...\})$);
- of the cost function, the cost function being of the following form:

$$C(X) = \sum_{I(\{i,j\})<0} \min\left(u_i(x_i)u_j(x_j)\right).I(\{i,j\}) + \sum_{I(\{i,j\})<0} \max\left(u_i(x_i)u_j(x_j)\right).|I(\{i,j\})|$$

$$+ \sum_{i=1}^{n} u_i(x_i).\left(\phi_i - \frac{1}{2}\sum_{j\neq i}|I(\{i,j\})|\right)$$

where min is the minimum operator, max is the maximum operator, X is a vector associated with a candidate, each element of the vector X corresponding to a service of the candidate and being equal to the rate of satisfaction of a component of the service request by the corresponding service, where $x_i$, $x_j$ are respectively the rate of satisfaction of the component relative to the attribute i and of the component relative to the attribute j , and where $u_i$, is the utility function relative to the attribute i, $\Phi_i$ is the specific weight relative to the attribute i, $I(\{i,j\})$ the joint weight relative to the attributes i, j and $|I(\{i,j\})|$ denotes the absolute value of the joint weight $I(\{i,j\})$.

14. A selection device (2) for selecting at least one service to be provided by a telecommunications network from among a plurality of predetermined services and each comprising at least one attribute, the device (2) being **characterized in that** it comprises the computing means (4) associated with the storage means (6) in order to operationally implement the method according to any one of claims 1 to 13.

FIG.1

FIG.2

FIG.3

FIG.4

## RÉFÉRENCES CITÉES DANS LA DESCRIPTION

**Documents brevets cités dans la description**

- US 2013301431 A1